# EUROPEAN PATENT APPLICATION

(11) **EP 3 312 022 A1**
(43) Date of publication of application: **25.04.2018**
(21) Application number: 17195004.1
(22) Date of filing: 05.10.2017
(51) Int. Cl.: B60C 9/20, B60C 9/26

(54) **PNEUMATIC TIRE**

(30) Priority: 18.10.2016 JP 2016203986
(71) Applicant: Sumitomo Rubber Industries, Ltd., Kobe-shi, Hyogo-ken (JP)
(72) Inventor: Kobayashi, Hiroyuki, Kobe-shi, Hyogo 651-0072 (JP)
(74) Representative: Manitz Finsterwald Patentanwälte PartmbB

(57) **Abstract**

In a tire 2, a band 16 has a jointless structure. A reinforcing layer 18 is layered over the band 16 from a radially outer side of the band 16. In the reinforcing layer 18, a reinforcing cord 40 is extended alternately on and between one end 32 portion of the band 16 and the other end 32 portion of the band 16, so as to extend in the circumferential direction. A direction in which the reinforcing cord 40 extends is tilted relative to the circumferential direction between one of ends 32 of the band 16 and the other of the ends 32 of the band 16. An absolute value of an angle of the reinforcing cord 40 relative to the circumferential direction is greater than or equal to 70°.

## Description

### BACKGROUND OF THE INVENTION

### Field of the Invention

The present invention relates to pneumatic tires. More specifically, the present invention relates to pneumatic tires for motorcycles.

### Description of the Related Art

For tires for motorcycles, a band having a jointless structure may be used. A band cord included in the band is helically wound.

In the band, the band cord extends substantially in the circumferential direction. A high lateral force cannot be obtained by this band. A tire that exerts a low lateral force tends to be poor in cornering performance.

For example, a member (hereinafter, referred to as cut ply) that includes multiple cords aligned with each other contributes to improvement of a lateral force of a tire. Thus, it is considered that a member including a cord that is tilted relative to the equator plane is used for a tire having a band in order to improve cornering performance. An exemplary consideration is disclosed in JP2007-168474.

If a cut ply is provided between a tread and a band, a high lateral force is expected to be obtained. However, depending on positioning of the cords included in the cut ply, stiffness may be enhanced in a tread area, and absorbing characteristics may be degraded. Increase of bending stiffness in the tread area leads to reduction of a ground-contact area. In this case, since the ground-contact area affects a lateral force, the previously expected lateral force may not be obtained.

An object of the present invention is to provide a pneumatic tire that can achieve improvement of a lateral force without reducing high-speed stability.

### SUMMARY OF THE INVENTION

A pneumatic tire according to the present invention includes: a tread; a pair of beads; a carcass; a band; and a reinforcing layer. Each of the beads is disposed inward of the tread in a radial direction. The carcass has a radial structure, and is extended on and between one of the beads and the other of the beads. The band is disposed between the tread and the carcass in the radial direction, and the band includes a band cord that is helically wound. The reinforcing layer is layered over the band from a radially outer side of the band. The reinforcing layer is formed from a ribbon that is wound at least once in a circumferential direction, and the ribbon includes a reinforcing cord. In the reinforcing layer, the reinforcing cord is extended alternately on and between one end portion of the band and the other end portion of the band, so as to extend in the circumferential direction. A direction in which the reinforcing cord extends is tilted relative to the circumferential direction between one of ends of the band and the other of the ends of the band. An absolute value of an angle of the reinforcing cord relative to the circumferential direction is greater than or equal to 70°.

In the pneumatic tire, the absolute value of the angle of the reinforcing cord relative to the circumferential direction is preferably not greater than 89°

In the pneumatic tire, the reinforcing layer preferably includes a center portion and a pair of side portions. Each of the side portions is preferably disposed outward of the center portion in an axial direction. A difference between an angle of the reinforcing cord relative to the circumferential direction in the center portion, and an angle of the reinforcing cord relative to the circumferential direction in each of the side portions is preferably greater than or equal to 3° and preferably not greater than 18°.

In the pneumatic tire, in the reinforcing layer, the ribbon is preferably wound twice in the circumferential direction.

The pneumatic tire according to the present invention includes the band having a jointless structure. The band contributes to high-speed stability of the tire.

In the tire, the reinforcing cord zigzags in the reinforcing layer. Between one of the ends of the band and the other of the ends of the band, the direction in which the reinforcing cord extends is not orthogonal to the circumferential direction but is tilted relative to the circumferential direction. A density of the reinforcing cord included in the reinforcing layer is appropriately maintained. Therefore, influence of the reinforcing layer on the stiffness of the tread area is effectively reduced. In the tire, a ground-contact area is sufficiently assured. In the tire, the reinforcing layer is adhered directly to the band, and the reinforcing cord included in the reinforcing layer intersects the band cord. The reinforcing layer effectively holds the band. By the tire, a high lateral force is obtained. In the tire, the reinforcing layer contributes to exerting of a lateral force.

The tire allows improvement of a lateral force without reducing high-speed stability. According to the present invention, a pneumatic tire that allows improvement of a lateral force without reducing high-speed stability is obtained.

### BRIEF DESCRIPTION OF THE DRAWINGS

FIG. 1 is a cross-sectional view of a part of a pneumatic tire according to one embodiment of the present invention;
FIG. 2 is a development of parts of a band and a reinforcing layer of the tire shown in FIG. 1;
FIG. 3 is a perspective view of a ribbon for the reinforcing layer;
FIG. 4 is a cross-sectional view taken along an equator plane of the tire shown in FIG. 1;
FIG. 5 is a development of a part of a reinforcing layer of a pneumatic tire according to another embodiment of the present invention; and
FIG. 6 is a development of a part of a reinforcing layer of a pneumatic tire according to still another embodiment of the present invention.

### DESCRIPTION OF THE PREFERRED EMBODIMENTS

The following will describe in detail the present invention based on preferred embodiments with reference where appropriate to the accompanying drawing.

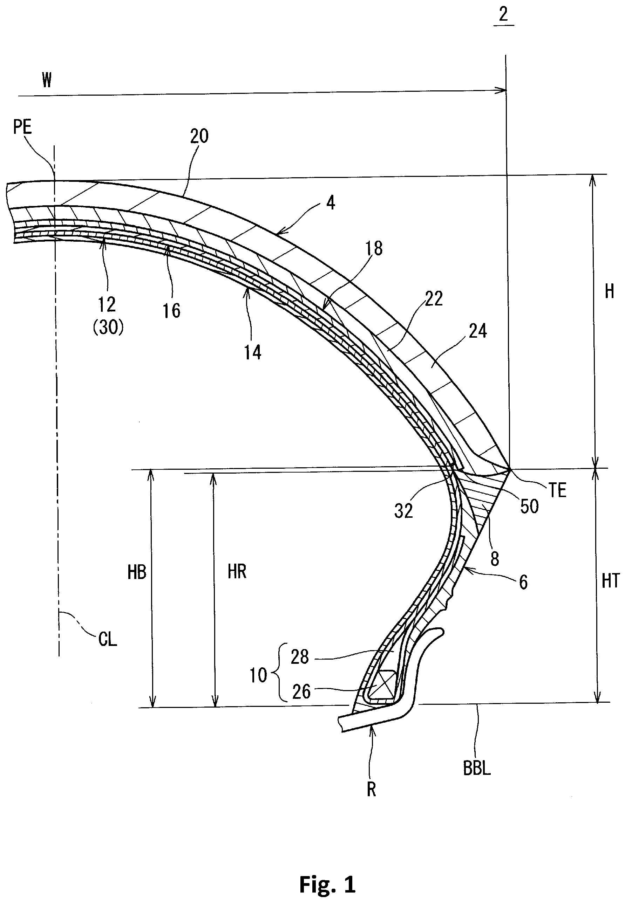

FIG. 1 shows a pneumatic tire 2. In FIG. 1, the up-down direction represents the radial direction of the tire 2, the left-right direction represents the axial direction of the tire 2, and the direction perpendicular to the surface of the drawing sheet represents the circumferential direction of the tire 2. In FIG. 1, an alternate long and short dash line CL represents the equator plane of the tire 2. The shape of the tire 2 is symmetric about the equator plane except for a tread pattern.

The tire 2 includes a tread 4, a pair of sidewalls 6, a pair of wings 8, a pair of beads 10, a carcass 12, an inner liner 14, a band 16, and a reinforcing layer 18. The tire 2 is of a tubeless type. The tire 2 is mounted to a motorcycle. In particular, the tire 2 is mounted to a rear wheel of a motorcycle. In other words, the tire 2 is a rear tire.

The tread 4 has a shape projecting outward in the radial direction. The tread 4 forms a tread surface 20 that comes into contact with a road surface. The tread 4 has no grooves. The tire 2 is a slick tire. In the tire 2, the tread 4 may have grooves formed therein, and have a tread pattern.

As described above, the tire 2 is mounted not to a passenger car but to a motorcycle. Therefore, as shown in FIG. 1, the outline of the tread surface 20 of the tire 2 is greatly curved. In the tire 2, the equator portion (center) of the tire 2 mainly contacts with a road surface in straight running. A rider tilts a vehicle in cornering while causing the vehicle to run. Therefore, in cornering, a portion that is axially outward of the center contacts with a road surface. In a full bank state, the end portion (shoulder) of the tread 4 of the tire 2 mainly contacts with a road surface.

In FIG. 1, reference character TE represents each end of the tread surface 20. In the tire 2, the ends TE of the tread surface 20 are each the axially outer side end of the tire 2. A double-headed arrow W represents the cross-sectional width of the tire 2. The cross-sectional width W is represented as a distance, in the axial direction, from one of the ends TE of the tread surface 20 to the other of the ends TE of the tread surface 20. Reference character PE represents the radially outer side end of the tire 2. The outer side end PE is also referred to as the equator of the tire 2. A double-headed arrow H represents a distance, in the radial direction, from the end TE of the tread surface 20 to the outer side end PE.

As described above, since the tire 2 is mounted to a motorcycle, the outline of the tread surface 20 is greatly curved. In a case where the degree of the curving is represented as a ratio of the distance H to the cross-sectional width W, the ratio is set to be greater than or equal to 0.25 and not greater than 0.45 in the tire 2.

In the tire 2, the tread 4 has a base layer 22 and a cap layer 24. The cap layer 24 is disposed outward of the base layer 22 in the radial direction. The cap layer 24 is layered over the base layer 22. The base layer 22 is formed from crosslinked rubber having an excellent adhesiveness. A typical base rubber of the base layer 22 is natural rubber. The cap layer 24 is formed from crosslinked rubber having excellent wear resistance, heat resistance, and grip performance.

The tire 2 is mounted particularly to a motorcycle for racing, among motorcycles. In a running state, the tread 4 is heated, and the temperature of the tread 4 is significantly high. From the viewpoint that the tread 4 can have a sufficient stiffness at a high temperature, the hardness of the cap layer 24 at the temperature of 100°C is preferably higher than or equal to 30. From the viewpoint that the tread 4 can exhibit sufficient grip performance at a high temperature, the hardness thereof is preferably not higher than 40. The cap layer 24 is very hard at a temperature of 20 to 30°C, that is, at room temperature. Specifically, the hardness of the cap layer 24 is higher than 90 at the temperature of 23°C.

In the present invention, the hardness is measured by a type A durometer in compliance with "JIS K6253". Specifically, the durometer is pressed against the cross-sectional surface shown in FIG. 1, and the hardness is measured. The hardness at the temperature of 100°C is measured after the tire 2 is placed in an oven set to 100°C and is left as it is in the oven for three hours.

The sidewalls 6 extend almost inward from the ends, respectively, of the tread 4 in the radial direction. The sidewalls 6 are formed from crosslinked rubber having excellent cut resistance and weather resistance. The sidewalls 6 prevent damage to the carcass 12.

The wings 8 are disposed between the tread 4 and the sidewalls 6, respectively. The wings 8 are joined to the tread 4 and the sidewalls 6, respectively. The wings 8 are formed from crosslinked rubber having excellent adhesiveness.

The beads 10 are disposed inward of the sidewalls 6, respectively, in the radial direction. As described above, the sidewalls 6 extend almost inward from the ends of the tread 4 in the radial direction. The beads 10 are disposed inward of the tread 4 in the radial direction. Each bead 10 includes a core 26 and an apex 28 that extends outward from the core 26 in the radial direction. The core 26 is ring-shaped, and includes a wound non-stretchable wire. A typical material of the wire is steel. The apex 28 is tapered outward in the radial direction. The apex 28 is formed from highly hard crosslinked rubber.

The carcass 12 includes a carcass ply 30. In the tire 2, the carcass 12 is formed from one carcass ply 30. The carcass ply 30 is extended on and between the beads 10 on both sides, along the tread 4 and the sidewalls 6. The carcass ply 30 is turned up around each core 26 from the inner side toward the outer side in the axial direction. The carcass 12 may be formed from two or more carcass plies 30.

The carcass ply 30 includes multiple carcass cords aligned with each other, and topping rubber, which is not shown. The absolute value of an angle of each carcass cord relative to the equator plane is from 75° to 90°. In other words, the carcass 12 has a radial structure. The carcass cord is formed from an organic fiber. Preferable examples of the organic fiber include polyester fibers, nylon fibers, rayon fibers, polyethylene naphthalate fibers, and aramid fibers.

An inner liner 14 is disposed inward of the carcass 12. The inner liner 14 is joined to the inner surface of the carcass 12. The inner liner 14 is formed from crosslinked rubber having excellent airtightness. A typical base rubber of the inner liner 14 is isobutylene-isoprene-rubber or halogenated isobutylene-isoprene-rubber. The inner liner 14 maintains an internal pressure of the tire 2.

The band 16 is disposed inward of the tread 4 in the radial direction. The band 16 is layered over the carcass 12. The band 16 is disposed between the tread 4 and the carcass 12 in the radial direction. In the tire 2, the band 16 is layered over the carcass 12 without disposing another member therebetween. The band 16 continuously extends along the carcass 12 from one end TE side of the tread surface 20 to the other end TE side thereof. The band 16 reinforces the carcass 12.

In FIG. 1, a solid line BBL represents a bead base line. The bead base line is a line that defines a rim diameter (see JATMA) of a rim R on which the tire 2 is mounted. The bead base line extends in the axial direction. In FIG. 1, a double-headed arrow HT represents a distance, in the radial direction, from the bead base line to the end TE of the tread surface 20. A double-headed arrow HB represents a distance, in the radial direction, from the bead base line to an end 32 of the band 16. The rim R is a normal rim.

In the description herein, the normal rim represents a rim which is specified according to the standard with which the tire 2 complies. The "standard rim" in the JATMA standard, the "Design Rim" in the TRA standard, and the "Measuring Rim" in the ETRTO standard are included in the normal rim.

In the tire 2, a ratio of the distance HB to the distance HT is greater than or equal to 0.8 and not greater than 1.3. In other words, the end 32 of the band 16 is disposed near the end TE of the tread surface 20 in the radial direction. The band 16 effectively reinforces the tire 2.

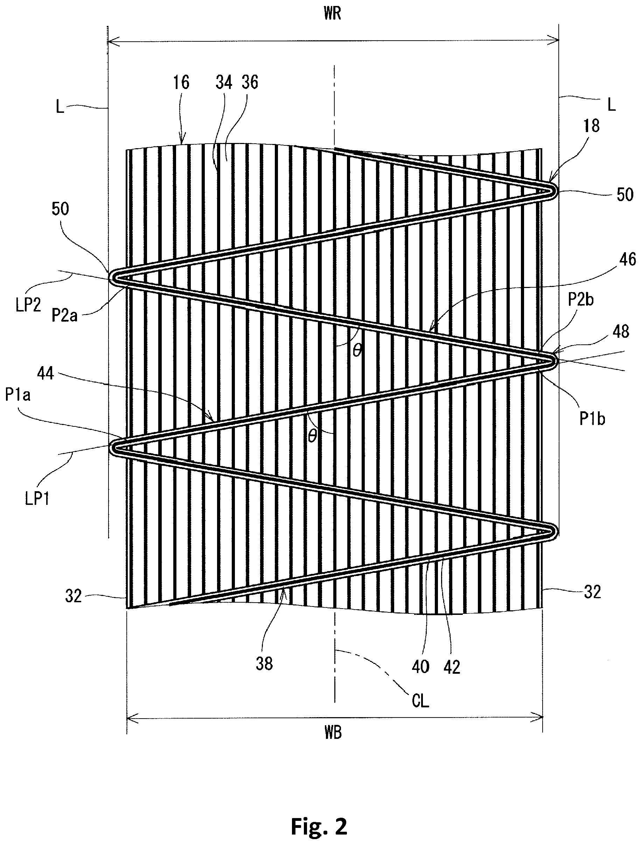

FIG. 2 is an enlarged view illustrating a part of the band 16 shown in FIG. 1, together with the reinforcing layer 18. In FIG. 2, the up-down direction represents the circumferential direction of the tire 2, and the left-right direction represents the axial direction of the tire 2. The direction perpendicular to the surface of the drawing sheet represents the radial direction of the tire 2.

In the tire 2, the band 16 includes a band cord 34 and a topping rubber 36. In FIG. 2, for convenience of description, the band cord 34 is represented by a solid line. However, in the tire 2, the band cord 34 is covered with the topping rubber 36.

In the tire 2, for the topping rubber 36 of the band 16, a crosslinked rubber having a hardness that is in a range of 45 to 70, preferably in a range of 50 to 70, at the temperature of 23°C, is used. In other words, the hardness of the topping rubber 36 of the band 16 is higher than or equal to 45 and not higher than 70, and preferably higher than or equal to 50 and preferably not higher than 70 at the temperature of 23°C.

In the tire 2, the band cord 34 is helically wound. In other words, the band 16 includes the band cord 34 that is helically wound. The band cord 34 extends substantially in the circumferential direction. An angle of the band cord 34 relative to the circumferential direction is less than or equal to 5°, and more preferably less than or equal to 2°. The carcass 12 is held by the band cord 34.

In the tire 2, a preferable material of the band cord 34 is steel. An organic fiber may be used for the band cord 34. Preferable examples of the organic fiber include polyester fibers, nylon fibers, rayon fibers, polyethylene naphthalate fibers, and aramid fibers. From the viewpoint that the band 16 having a sufficient stiffness can be formed, the organic fiber is preferably an aramid fiber.

In the tire 2, the band 16 has a jointless structure. The band 16 contributes to high-speed stability of the tire 2.

In FIG. 2, a double-headed arrow WB represents a length from one of the ends 32 of the band 16 to the other of the ends 32 of the band 16. The length WB is a developed width of the band 16. The developed width WB is set as appropriate according to the specifications of the tire 2. In a case where the tire 2 is for a motorcycle, particularly, the tire 2 is a rear tire for racing, the developed width WB is set to be in a range of 100 mm to 300 mm in the tire 2. In other words, in the tire 2, the band 16 is structured such that the developed width WB is greater than or equal to 100 mm and not greater than 300 mm.

The reinforcing layer 18 is disposed inward of the tread 4 in the radial direction. The reinforcing layer 18 is layered over the band 16 from the radially outer side of the band 16. In the tire 2, the reinforcing layer 18 is layered over the band 16 without disposing another member therebetween.

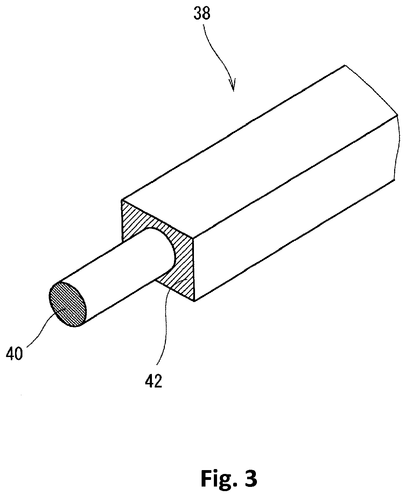

In the tire 2, the reinforcing layer 18 is formed by using a ribbon 38 shown in FIG. 3. The ribbon 38 includes a reinforcing cord 40 and a topping rubber 42. The reinforcing cord 40 extends in the length direction of the ribbon 38. The reinforcing cord 40 is covered with the topping rubber 42.

In the tire 2, for the topping rubber 42 of the reinforcing layer 18, a crosslinked rubber having a hardness that is in a range of 45 to 70, preferably in a range of 50 to 70 at the temperature of 23°C, is used. In other words, the hardness of the topping rubber 42 of the reinforcing layer 18 is higher than or equal to 45 and not higher than 70, and preferably higher than or equal to 50 and preferably not higher than 70 at the temperature of 23°C.

In the tire 2, the ribbon 38 includes one reinforcing cord 40. The ribbon 38 may include a plurality of reinforcing cords 40. In this case, the reinforcing cords 40 are aligned in the width direction of the ribbon 38, which is not shown. The number of the reinforcing cords 40 included in the ribbon 38 is not particularly limited. However, the number of the reinforcing cords 40 is preferably less than or equal to five, more preferably less than or equal to three, and even more preferably less than or equal to two.

As shown in FIG. 2, in the tire 2, the ribbon 38 is extended alternately on and between one end 32 portion of the band 16 and the other end 32 portion of the band 16, and wound in the circumferential direction. The reinforcing layer 18 of the tire 2 is formed by the ribbon 38 that is extended alternately on and between the one end 32 portion of the band 16 and the other end 32 portion of the band 16, and wound once in the circumferential direction. A state where the ribbon 38 is wound once in the circumferential direction represents a state where a position of the front end of the ribbon 38 is the same as a position of the rear end of the ribbon 38 in the circumferential direction.

As described above, in the ribbon 38, the reinforcing cord 40 is covered with the topping rubber 42. However, in FIG. 2, for convenience of description, the reinforcing cord 40 is represented by a solid line, similarly to the band cord 34 described above.

The reinforcing cord 40 extends in the length direction of the ribbon 38. Therefore, in the reinforcing layer 18, the reinforcing cord 40 is extended alternately on and between the one end 32 portion of the band 16 and the other end 32 portion of the band 16, so as to extend in the circumferential direction. In other words, in the reinforcing layer 18, the reinforcing cord 40 includes: multiple first elements 44 that are each extended on and between the one end 32 portion of the band 16 and the other end 32 portion of the band 16; and multiple second elements 46 that are each extended on and between the other end 32 portion of the band 16 and the one end 32 portion of the band 16. The first elements 44 and the second elements 46 alternate in the circumferential direction. In the reinforcing layer 18, a turned-back portion 48 is disposed between the first element 44 and the second element 46. The first element 44 and the second element 46 are connected to each other by the turned-back portion 48. In the tire 2, the turned-back portion 48 is disposed near each end 32 of the band 16. In the tire 2, in the reinforcing layer 18, the reinforcing cord 40 continuously extends without interruption. The reinforcing layer 18 also has a jointless structure, similarly to the band 16.

In FIG. 2, reference character P1a represents a boundary between the turned-back portion 48 and the first element 44 at the one of the ends 32 of the band 16. Reference character P1b represents a boundary between the turned-back portion 48 and the first element 44 at the other of the ends 32 of the band 16. The boundary P1a and the boundary P1b are each specified by an intersection of: a loop, of the band cord 34, which is close to the end 32 of the band 16; and the reinforcing cord 40. In a case where an end 50 of the reinforcing layer 18 is positioned axially inward of the end 32 of the band 16, these boundaries are each specified by an intersection of: the reinforcing cord 40; and a loop disposed at the outermost position in the axial direction, among loops of the band cord 34 positioned axially inward of the end 50 of the reinforcing layer 18.

In the tire 2, a straight line (a solid line LP1 in FIG. 2) obtained by connecting between the boundary P1a and the boundary P1b represents a direction in which the first element 44 extends between the one of the ends 32 of the band 16 and the other of the ends 32 of the band 16. As is apparent from FIG. 2, the boundary P1a and the boundary P1b are not at the same position in the circumferential direction. The direction in which the first element 44 extends is tilted relative to the circumferential direction.

In FIG. 2, reference character P2a represents a boundary between the turned-back portion 48 and the second element 46 at the one of the ends 32 of the band 16. Reference character P2b represents a boundary between the turned-back portion 48 and the second element 46 at the other of the ends 32 of the band 16. The boundary P2a and the boundary P2b are specified in manners similar to those for the boundary P1a and the boundary P1b described above.

In the tire 2, a straight line (a solid line LP2 in FIG. 2) obtained by connecting between the boundary P2a and the boundary P2b represents a direction in which the second element 46 extends between the one of the ends 32 of the band 16 and the other of the ends 32 of the band 16. As is apparent from FIG. 2, the boundary P2a and the boundary P2b are not at the same position in the circumferential direction. The direction in which the second element 46 extends is tilted relative to the circumferential direction. The direction in which the extending direction of the second element 46 is tilted relative to the circumferential direction is opposite to the direction in which the extending direction of the first element 44 is tilted relative to the circumferential direction.

In the tire 2, the reinforcing cord 40 zigzags in the reinforcing layer 18. As described above, the direction in which the first element 44 of the reinforcing cord 40 extends is tilted relative to the circumferential direction. The direction in which the second element 46 of the reinforcing cord 40 extends is also tilted relative to the circumferential direction. In the tire 2, between the one of the ends 32 of the band 16 and the other of the ends 32 of the band 16, the direction in which the reinforcing cord 40 extends is not orthogonal to the circumferential direction but is tilted relative to the circumferential direction. In the tire 2, a density of the reinforcing cord 40 included in the reinforcing layer 18 is appropriately maintained. Therefore, influence of the reinforcing layer 18 on the stiffness of the tread 4 portion is effectively reduced. In the tire 2, a ground-contact area is sufficiently assured. Further, in the tire 2, the reinforcing layer 18 is adhered directly to the band 16, and the reinforcing cord 40 included in the reinforcing layer 18 intersects the band cord 34. The reinforcing layer 18 effectively holds the band 16. By the tire 2, a high lateral force is obtained. In the tire 2, the reinforcing layer 18 contributes to exerting of a lateral force.

In a case where the direction in which the reinforcing cord 40 extends is orthogonal to the circumferential direction between one of the ends 32 of the band 16 and the other of the ends 32 of the band 16, an interval between the first element 44 and the second element 46 is uniform in the axial direction. Meanwhile, in the tire 2, as described above, the direction in which the reinforcing cord 40 extends is tilted relative to the circumferential direction between one of the ends 32 of the band 16 and the other of the ends 32 of the band 16. Therefore, an interval between the first element 44 and the second element 46 gradually expands from one of the ends 32 of the band 16 toward the other of the ends 32 of the band 16, and, at the ends 32, each turned-back portion 48 between the first element 44 and the second element 46 is positioned. The expansion of the interval more effectively reduces influence of the reinforcing layer 18 on the stiffness of the tread 4 portion. In the tire 2, a ground-contact area is sufficiently assured in not only a center portion but also shoulder portions. The reinforcing layer 18 allows the tire 2 to sufficiently exert a lateral force.

As described above, the band 16 of the tire 2 contributes to high-speed stability. The tire 2 allows improvement of a lateral force without reducing high-speed stability. According to the present invention, the pneumatic tire 2 that allows improvement of a lateral force without reducing high-speed stability can be obtained.

In FIG. 2, an angle θ represents an angle of the reinforcing cord 40 relative to the circumferential direction. As described above, the reinforcing cord 40 zigzags in the reinforcing layer 18. Therefore, in a case where the angle θ of the first element 44 of the reinforcing cord 40 relative to the circumferential direction is represented as a "positive number", the angle θ of the second element 46 of the reinforcing cord 40 relative to the circumferential direction is represented as a "negative number". The angle θ is also referred to as a tilt angle of the reinforcing cord 40.

In the tire 2, the first element 44 of the reinforcing cord 40 linearly extends from the one of the ends 32 of the band 16 toward the other of the ends 32 of the band 16 without bending. The second element 46 of the reinforcing cord 40 also linearly extends from the other of the ends 32 of the band 16 toward the one of the ends 32 of the band 16 without bending. The tilt angle θ of the reinforcing cord 40 is the same between the equator plane portion of the tire 2 and each shoulder portion of the tire 2, and is less than 90°. In other words, the tilt angle θ of the reinforcing cord 40 is less than 90° between one of the ends 32 of the band 16 and the other of the ends 32 of the band 16. By the tilt angle θ of the reinforcing cord 40, ensuring of a ground-contact area and holding of the band 16 are influenced. In the tire 2, from the viewpoint that the reinforcing layer 18 effectively contributes to ensuring of a ground-contact area and holding of the band 16, the absolute value of the angle θ is preferably greater than or equal to 70° and preferably not greater than 89°. The absolute value of the angle θ is more preferably greater than or equal to 75° and more preferably not greater than 85°. In the reinforcing layer 18 shown in FIG. 2, the tilt angle θ of the reinforcing cord 40 is represented as an angle measured at the equator plane unless otherwise specified.

In the tire 2, the absolute value of the tilt angle θ (hereinafter, may be referred to as tilt angle θ1) of the first element 44 of the reinforcing cord 40 is equal to the absolute value of the tilt angle θ (hereinafter, may be referred to as tilt angle θ2) of the second element 46 thereof. In the tire 2, the reinforcing layer 18 may be structured such that the absolute value of the tilt angle θ1 and the absolute value of the tilt angle θ2 are different from each other. From the viewpoint that a specific portion in stiffness in the circumferential direction is less likely to be formed, the absolute value of the tilt angle θ1 and the absolute value of the tilt angle θ2 are preferably equal to each other. In the present invention, when difference between the absolute value of the tilt angle θ1 and the absolute value of the tilt angle θ2 is less than or equal to 1°, the absolute value of the tilt angle θ1 and the absolute value of the tilt angle θ2 are regarded as being equal to each other.

In FIG. 2, solid lines L represent straight lines that extend through the ends 50 of the reinforcing layer 18 in the circumferential direction. A double-headed arrow WR represents a length from one of the solid lines L to the other of the solid lines L. The length WR represents a developed width of the reinforcing layer 18.

In the tire 2, a ratio of the developed width WR of the reinforcing layer 18 to the developed width WB of the band 16 is preferably greater than or equal to 0.8 and preferably not greater than 1.2. When the ratio is set to be greater than or equal to 0.8, the reinforcing layer 18 effectively contributes to holding of the band 16. In this viewpoint, the ratio is more preferably greater than or equal to 0.9. When the ratio is set to be not greater than 1.2, influence of the reinforcing layer 18 on the mass is reduced. In this viewpoint, the ratio is more preferably not greater than 1.1.

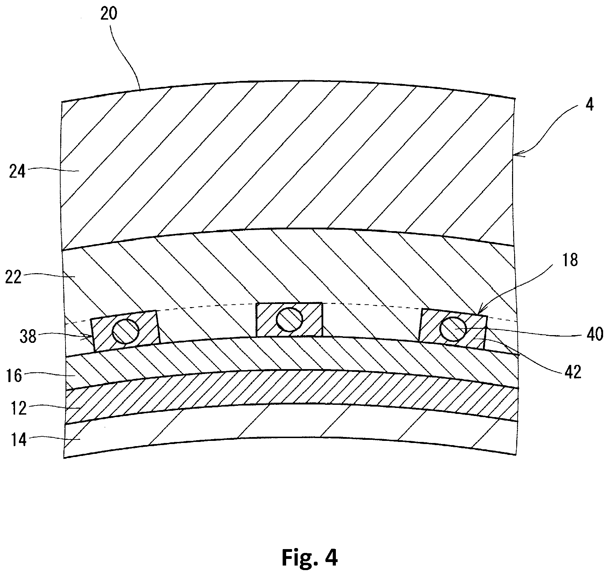

FIG. 4 shows a part of a cross-section taken along the equator plane of the tire 2. In FIG. 4, the direction perpendicular to the surface of the drawing sheet represents the axial direction of the tire 2.

As shown in FIG. 4, the cross-section of the reinforcing layer 18 includes multiple cross-sections (hereinafter, referred to as cord cross-sections) of the reinforcing cord 40. The cord cross-sections are disposed so as to be spaced from each other in the circumferential direction. In the tire 2, in the cross-section of the reinforcing layer 18 along the equator plane, specifically, in the cross-section, along the equator plane, of the ribbon 38 that is wound once in the circumferential direction, the appropriate number of cord cross-sections are included per unit length of the reinforcing layer 18. In the tire 2, influence of the reinforcing layer 18 on the stiffness of the tread 4 portion is effectively reduced. In the tire 2, a ground-contact area is sufficiently assured, and a lateral force is sufficiently exerted. In this viewpoint, in a case where the number of the cord cross-sections per 5 cm length of the reinforcing layer 18 is represented as a density of the reinforcing cord 40, the density of the reinforcing cord 40 is preferably less than or equal to 20 ends/5 cm, and more preferably less than or equal to 15 ends/5 cm. From the viewpoint that the reinforcing layer 18 effectively holds the band 16, the density of the reinforcing cord 40 is preferably not less than 1 end/5 cm, and more preferably not less than 2 ends/5 cm. When the density is measured, the length of the reinforcing layer 18 is measured along the outer surface of the band 16 at the cross-section shown in FIG. 4.

In the tire 2, as the reinforcing cord 40 for the reinforcing layer 18, a cord formed from an organic fiber is preferably used. Examples of the organic fiber include polyester fibers, nylon fibers, rayon fibers, polyethylene naphthalate fibers, and aramid fibers. From the viewpoint that the reinforcing layer 18 having a sufficient stiffness can be formed, the organic fiber is preferably an aramid fiber.

In the tire 2, the reinforcing cord 40 is formed from at least one filament. In a case where the reinforcing cord 40 is formed from an organic fiber, the fineness of the filament is preferably greater than or equal to 440 dtex from the viewpoint of the strength of the reinforcing cord 40. From the viewpoint of influence of the reinforcing cord 40 on the mass, the fineness of the filament is preferably not greater than 1670 dtex, and more preferably not greater than 1400 dtex. Particularly when a cord formed from an aramid fiber is used as the reinforcing cord 40, a cord having a structure represented as 880 dtex/2 is preferably used as the reinforcing cord 40.

In the present invention, the dimensions and angles of the components of the tire 2 are measured in a state where the tire 2 is mounted on a normal rim, and the tire 2 is inflated with air to a normal internal pressure. During the measurement, no load is applied to the tire 2.

In the description herein, the normal internal pressure represents an internal pressure that is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard, are included in the normal internal pressure.

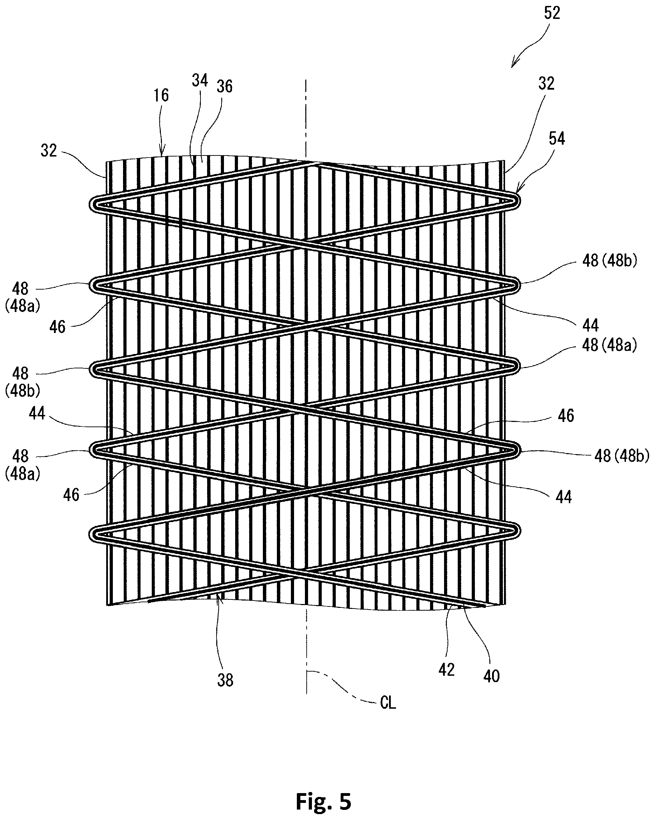

FIG. 5 shows a reinforcing layer 54 of a tire 52 according to another embodiment of the present invention. In FIG. 5, the up-down direction represents the circumferential direction of the tire 52, and the left-right direction represents the axial direction of the tire 52. The direction perpendicular to the surface of the drawing sheet represents the radial direction of the tire 52. FIG. 5 corresponds to FIG. 2 described above.

The tire 52 has the same structure as the tire 2 shown in FIG. 1 except for the reinforcing layer 54. Therefore, in FIG. 5, the same components as described for the tire 2 shown in FIG. 1 are denoted by the same reference characters, and the description thereof is omitted.

In the tire 52, the reinforcing layer 54 is formed by using the ribbon 38 shown in FIG. 3, similarly to the reinforcing layer 18 shown in FIG. 2. The ribbon 38 includes the reinforcing cord 40 and the topping rubber 42. The reinforcing cord 40 is covered with the topping rubber 42. However, also in FIG. 5, for convenience of description, the reinforcing cord 40 is represented by a solid line.

As shown in FIG. 5, in the tire 52, the ribbon 38 is extended alternately on and between one end 32 portion of the band 16 and the other end 32 portion of the band 16, and is wound in the circumferential direction. In particular, the reinforcing layer 54 of the tire 52 is formed such that the reinforcing layer 54 is extended alternately on and between the one end 32 portion of the band 16 and the other end 32 portion of the band 16, and the ribbon 38 is wound twice in the circumferential direction. In the reinforcing layer 54, the ribbon 38 is wound twice in the circumferential direction. The reinforcing layer 54 of the tire 52 has the same structure as the reinforcing layer 18 shown in FIG. 2 except that the reinforcing layer 54 is formed by the ribbon 38 that is wound twice in the circumferential direction.

The reinforcing cord 40 extends in the length direction of the ribbon 38. Therefore, in the reinforcing layer 54, the reinforcing cord 40 is extended alternately on and between the one end 32 portion of the band 16 and the other end 32 portion of the band 16, so as to extend in the circumferential direction. The reinforcing cord 40 includes multiple first elements 44, multiple second elements 46, and multiple turned-back portions 48. The first elements 44 and the second elements 46 alternate in the circumferential direction. The first element 44 and the second element 46 are connected to each other by the turned-back portion 48.

In the tire 52, the reinforcing cord 40 zigzags in the reinforcing layer 54. In the tire 52, between the one of the ends 32 of the band 16 and the other of the ends 32 of the band 16, the direction in which the reinforcing cord 40 extends is not orthogonal to the circumferential direction but is tilted relative to the circumferential direction. In the tire 52, a density of the reinforcing cord 40 included in the reinforcing layer 54 is appropriately maintained. Therefore, influence of the reinforcing layer 54 on the stiffness of the tread 4 portion is effectively reduced. In the tire 52, a ground-contact area is sufficiently assured. Further, in the tire 52, the reinforcing layer 54 is adhered directly to the band 16, and the reinforcing cord 40 included in the reinforcing layer 54 intersects the band cord 34. The reinforcing layer 54 effectively holds the band 16. By the tire 52, a high lateral force is obtained. In the tire 52, the reinforcing layer 54 contributes to exerting of a lateral force.

In the tire 52, the band 16 has a jointless structure. The band 16 contributes to high-speed stability. The tire 52 allows improvement of a lateral force without reducing high-speed stability.

In the tire 52, the reinforcing layer 54 is formed from the ribbon 38 that is extended alternately on and between the one end 32 portion of the band 16 and the other end 32 portion of the band 16, and that is wound twice in the circumferential direction. The reinforcing layer 54 has a stiffness higher than the reinforcing layer 18 shown in FIG. 2 in the above description. Therefore, in the reinforcing layer 54, the tread 4 portion has a slightly enhanced stiffness, and a ground-contact area of the tire 52 is reduced as compared to a ground-contact area of the tire 2 having the reinforcing layer 18 shown in FIG. 2. However, the reinforcing layer 54 more effectively holds the band 16. The reinforcing layer 54 is effective in a case where a force with which the band 16 is held needs to be further enhanced even if a ground-contact area is slightly reduced. If the number of times the ribbon 38 is wound in the circumferential direction is increased, influence of the reinforcing layer 54 on the stiffness of the tread 4 portion becomes excessively great. From the viewpoint that a ground-contact area is appropriately assured, and a lateral force can be sufficiently improved, the number of times the ribbon 38 is wound in the circumferential direction is preferably less than or equal to four, more preferably less than or equal to three, and even more preferably less than or equal to two.

As shown in FIG. 5, in the reinforcing layer 54 of the tire 52, the ribbon 38 is wound such that the turned-back portion 48a of the ribbon 38 that is wound in the first winding and the turned-back portion 48b of the ribbon 38 that is wound in the second winding alternate in the circumferential direction. In the tire 52, the ribbon 38 may be wound such that the turned-back portion 48a of the ribbon 38 that is wound in the first winding and the turned-back portion 48b of the ribbon 38 that is wound in the second winding are at the same position in the circumferential direction. The position, in the circumferential direction, of the turned-back portion 48b of the ribbon 38 that is wound in the second winding, relative to the position, in the circumferential direction, of the turned-back portion 48a of the ribbon 38 that is wound in the first winding, is not particularly limited. However, from the viewpoint that a portion having a specific stiffness is less likely to be formed in the circumferential direction in the reinforcing layer 54, as shown in FIG. 5, the ribbon 38 is preferably wound such that the turned-back portion 48a of the ribbon 38 that is wound in the first winding and the turned-back portion 48b of the ribbon 38 that is wound in the second winding alternate in the circumferential direction so as to be equally spaced from each other.

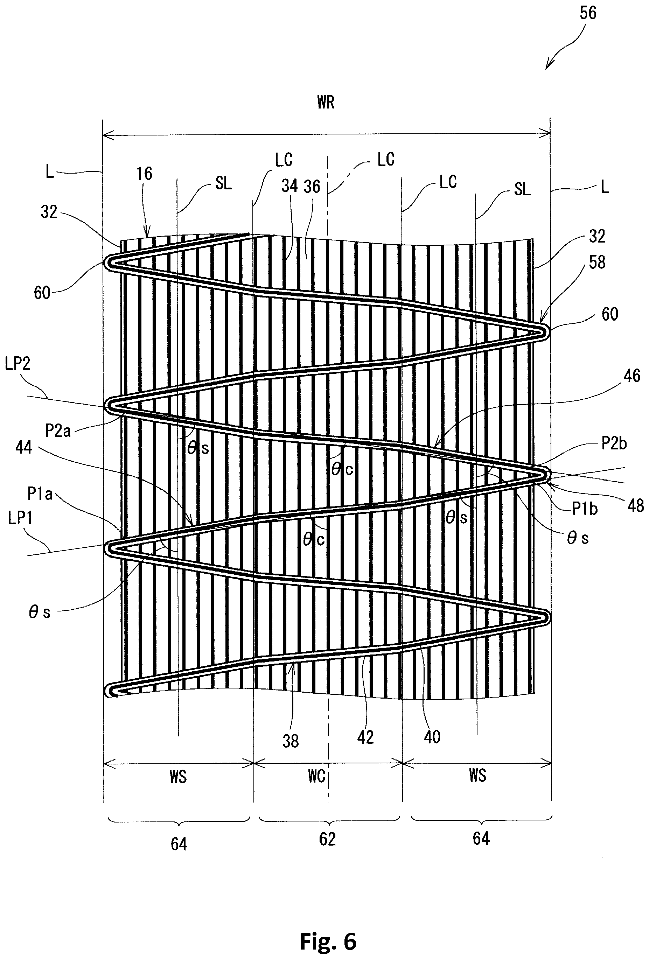

FIG. 6 shows a reinforcing layer 58 of a tire 56 according to still another embodiment of the present invention. In FIG. 6, the up-down direction represents the circumferential direction of the tire 56, and the left-right direction represents the axial direction of the tire 56. The direction perpendicular to the surface of the drawing sheet represents the radial direction of the tire 56. FIG. 6 corresponds to FIG. 2 described above.

The tire 56 has the same structure as the tire 2 shown in FIG. 1 except for the reinforcing layer 58. Therefore, in FIG. 6, the same components as described for the tire 2 shown in FIG. 1 are denoted by the same reference characters, and the description thereof is omitted.

In the tire 56, the reinforcing layer 58 is formed by using the ribbon 38 shown in FIG. 3, similarly to the reinforcing layer 18 shown in FIG. 2. The ribbon 38 includes the reinforcing cord 40 and the topping rubber 42. The reinforcing cord 40 is covered with the topping rubber 42. However, in FIG. 6, for convenience of description, the reinforcing cord 40 is represented by a solid line.

In the tire 56, similarly to the reinforcing layer 18 shown in FIG. 2, also in the reinforcing layer 58, the ribbon 38 is extended alternately on and between one end 32 portion of the band 16 and the other end 32 portion of the band 16, and is wound in the circumferential direction. In the tire 56, the ribbon 38 is wound once in the circumferential direction. However, similarly to the reinforcing layer 54, the ribbon 38 may be wound twice or more times in the circumferential direction. The ribbon 38 is merely required to be wound at least once in the circumferential direction.

The reinforcing cord 40 extends in the length direction of the ribbon 38. Therefore, in the reinforcing layer 58, the reinforcing cord 40 is extended alternately on and between the one end 32 portion of the band 16 and the other end 32 portion of the band 16, so as to extend in the circumferential direction. The reinforcing cord 40 includes multiple first elements 44, multiple second elements 46, and multiple turned-back portions 48. The first elements 44 and the second elements 46 alternate in the circumferential direction. The first element 44 and the second element 46 are connected to each other by the turned-back portion 48.

In FIG. 6, reference character P1a represents a boundary between the turned-back portion 48 and the first element 44 at the one of the ends 32 of the band 16. Reference character P1b represents a boundary between the turned-back portion 48 and the first element 44 at the other of the ends 32 of the band 16.

In the tire 56, a straight line (a solid line LP1 in FIG. 6) obtained by connecting between the boundary P1a and the boundary P1b represents a direction in which the first element 44 extends between the one of the ends 32 of the band 16 and the other of the ends 32 of the band 16. As is apparent from FIG. 6, the boundary P1a and the boundary P1b are not at the same position in the circumferential direction. The direction in which the first element 44 extends is tilted relative to the circumferential direction.

In FIG. 6, reference character P2a represents a boundary between the turned-back portion 48 and the second element 46 at the one of the ends 32 of the band 16. Reference character P2b represents a boundary between the turned-back portion 48 and the second element 46 at the other of the ends 32 of the band 16.

In the tire 56, a straight line (a solid line LP2 in FIG. 6) obtained by connecting between the boundary P2a and the boundary P2b represents a direction in which the second element 46 extends between the one of the ends 32 of the band 16 and the other of the ends 32 of the band 16. As is apparent from FIG. 6, the boundary P2a and the boundary P2b are not at the same position in the circumferential direction. The direction in which the second element 46 extends is tilted relative to the circumferential direction. The direction in which the extending direction of the second element 46 is tilted relative to the circumferential direction is opposite to the direction in which the extending direction of the first element 44 is tilted relative to the circumferential direction.

In the tire 56, the reinforcing cord 40 zigzags in the reinforcing layer 58. In the tire 56, between the one of the ends 32 of the band 16 and the other of the ends 32 of the band 16, the direction in which the reinforcing cord 40 extends is not orthogonal to the circumferential direction but is tilted relative to the circumferential direction. In the tire 56, a density of the reinforcing cord 40 included in the reinforcing layer 58 is appropriately maintained. Therefore, influence of the reinforcing layer 58 on the stiffness of the tread 4 portion is effectively reduced. In the tire 56, a ground-contact area is sufficiently assured. Further, in the tire 56, the reinforcing layer 58 is adhered directly to the band 16, and the reinforcing cord 40 included in the reinforcing layer 58 intersects the band cord 34. The reinforcing layer 58 effectively holds the band 16. By the tire 56, a high lateral force is obtained. In the tire 56, the reinforcing layer 58 contributes to exerting of a lateral force.

In the tire 56, the band 16 has a jointless structure. The band 16 contributes to high-speed stability. The tire 56 allows improvement of a lateral force without reducing high-speed stability.

In FIG. 6, solid lines L represent straight lines that extend through ends 60 of the reinforcing layer 58 in the circumferential direction. A double-headed arrow WR represents a length from one of the solid lines L to the other of the solid lines L. The length WR represents a developed width of the reinforcing layer 58.

In the tire 56, the reinforcing layer 58 includes a center portion 62 and a pair of side portions 64. Specifically, the reinforcing layer 58 is formed from the center portion 62 and the pair of side portions 64. The center portion 62 is positioned on the equator plane. In particular, in the tire 56, the center of the center portion 62 in the axial direction is equal to the equator plane. The side portions 64 are each disposed outward of the center portion 62 in the axial direction.

In FIG. 6, solid lines LC represent straight lines that extend in the circumferential direction. The solid lines LC represent boundaries between the center portion 62 and the side portions 64. A double-headed arrow WC represents a length from one of the solid lines LC to the other of the solid lines LC. The length WC represents a developed width of the center portion 62. Double-headed arrows WS each represent a length from the solid line L to the solid line LC. The length WS represents a developed width of each side portion 64. In the tire 56, the developed width WS of one of the side portions 64 and the developed width WS of the other of the side portions 64 are equal to each other.

In the tire 56, the reinforcing cord 40 does not linearly extend from the one of the ends 32 of the band 16 toward the other of the ends 32 of the band 16. The reinforcing cord 40 is formed such that the tilt angle θ of the reinforcing cord 40 changes at the boundaries LC.

In FIG. 6, an angle θc represents an angle of the reinforcing cord 40 in the center portion 62 relative to the circumferential direction. In the present invention, the tilt angle θc is measured at the center, in the developed width WC, of the center portion 62, in other words, measured at the equator plane. An angle θs represents an angle of the reinforcing cord 40 in each side portion 64 relative to the circumferential direction. In the present invention, the tilt angle θs is measured at the center, in the developed width WS, of the side portion 64. The positions at which the angle θs is measured are each represented by a solid line SL in FIG. 6.

As described for the reinforcing layer 18 shown in FIG. 2, in the tire 56, the tilt angle θ of the reinforcing cord 40 included in the reinforcing layer 58 is preferably set to be greater than or equal to 70° and not greater than 89°. In the reinforcing layer 58 shown in FIG. 6, both the tilt angle θc and the tilt angle θs may be greater than or equal to 70° and not greater than 89°. Either the tilt angle θc or the tilt angle θs may be greater than or equal to 70° and not greater than 89°. In other words, in a case where the tilt angle θc is in a range of greater than or equal to 70° and not greater than 89°, the tilt angle θs may not be in this range. In a case where the tilt angle θs is in a range of greater than or equal to 70° and not greater than 89°, the tilt angle θc may not be in this range.

In a case where the reinforcing cord 40 has a great tilt angle θ, the band 16 is held by the reinforcing cord 40. Therefore, the tread 4 portion having the reinforcing cord 40 has a relatively high stiffness. In a case where the reinforcing cord 40 has a small tilt angle Θ, a force with which the band 16 is held by the reinforcing cord 40 is reduced. Therefore, the tread 4 portion having the reinforcing cord 40 has a relatively low stiffness.

In the tire 56, the tilt angle θc is greater than the tilt angle θs. In the tire 56, the reinforcing cord 40 of the side portions 64 is tilted relative to the circumferential direction more greatly than the reinforcing cord 40 of the center portion 62. In a case where the tilt angle θc is adjusted on the basis of the tilt angle θs as a reference, the tread 4 portion is structured to have a stiffness such that the stiffness of the equator plane portion is higher than the stiffness of the shoulder portions. Meanwhile, in a case where the tilt angle θs is adjusted on the basis of the tilt angle θc as a reference, the tread 4 portion is structured to have a stiffness such that the stiffness of the shoulder portions is lower than the stiffness of the equator plane portion. The reinforcing layer 58 allows vertical stiffness to be enhanced while assuring a ground-contact area, or allows a ground-contact area to be assured while inhibiting enhancement of vertical stiffness. The tire 56 allows a lateral force to be sufficiently obtained while advantageously assuring absorbing characteristics. In this viewpoint, difference between the tilt angle θc and the tilt angle θs is preferably greater than or equal to 3°, and preferably not greater than 18°. Particularly when the absolute value of the tilt angle θs is set to be greater than or equal to 75° and not greater than 85°, the reinforcing layer 58 effectively contributes to more advantageous achieving of absorbing characteristics and more sufficient generation of a lateral force.

In the tire 56, a ratio of the developed width WC of the center portion 62 to the developed width WR of the reinforcing layer 58 is preferably greater than or equal to 1/12 and preferably not greater than 1/2. From the viewpoint that a lateral force is sufficiently obtained while absorbing characteristics are advantageously assured, the ratio is more preferably greater than or equal to 1/4 and more preferably not greater than 5/12. The ratio is particularly preferably 1/3.

As described above, the reinforcing layer of the present invention, such as the reinforcing layers 18, 54, and 58 each having the reinforcing cord 40 that zigzags, allows stiffness of the tread 4 portion to be freely controlled according to positioning of the reinforcing cord 40. The reinforcing layer can sufficiently function in a case where stiffness needs to be precisely controlled as in a tire used for racing. In other words, in a case where the band 16 is included as a component for a tire used for racing, a reinforcing layer having the reinforcing cord 40 that zigzags is preferably used for precisely controlling the stiffness of the tread 4 portion.

### EXAMPLES

Hereinafter, effects of the present invention will become apparent according to examples. However, the present invention should not be restrictively construed based on the description of examples.

### [Example 1]

A tire shown in FIG. 1 was produced. The size of the tire was 190/55R17. In example 1, a reinforcing layer having the structure shown in FIG. 2 was used. In example 1, the reinforcing layer was formed from a ribbon that was wound once in the circumferential direction, and this is indicated below as "1" in the column for "the number of times of stacking" in Table 1.

In example 1, the tilt angle θ of the reinforcing cord was set to 70°, and was set to be the same between the equator plane and shoulder portions. This is indicated as "70" in the columns for "tilt angle θc" and "tilt angle θs" in Table 1.

In example 1, a cord (structure=880 dtex/2) formed from an aramid fiber was used as the reinforcing cord.

### [Comparative example 1]

Comparative example 1 was a conventional tire. In comparative example 1, no reinforcing layer was provided.

### [Comparative example 2]

A tire of comparative example 2 was obtained in the same manner as for example 1 except that the reinforcing layer was replaced with one cut ply. Comparative example 2 was a conventional tire. "CUT1" in the column for "structure" in the below Table 1 indicates that one cut ply was used. The cut ply included multiple cords aligned with each other, and an angle of each cord relative to the circumferential direction was set to 90°. The density of the cords included in the cut ply was 30 ends/5 cm.

### [Comparative example 3]

A tire of comparative example 3 was obtained in the same manner as for example 1 except that the reinforcing layer was replaced with two cut plies. Comparative example 3 was a conventional tire. "CUT2" in the column for "structure" in the below Table 1 indicates that two cut plies were used. The two cut plies each included multiple cords aligned with each other, and an angle of each cord relative to the circumferential direction was set to 45°. A cord tilting direction was set such that a direction in which the cords in one of the cut plies were tilted was opposite to a direction in which the cords in the other of the cut plies were tilted. The density of the cords included in the cut plies was 30 ends/5 cm.

### [Example 2]

A tire of example 2 was obtained in the same manner as for example 1 except that a reinforcing layer having the structure shown in FIG. 5 was used as the reinforcing layer, and the tilt angle θc and the tilt angle θs were as indicated below in Table 1.

### [Example 3]

A tire of example 3 was obtained in the same manner as for example 1 except that a reinforcing layer having the structure shown in FIG. 6 was used as the reinforcing layer, and the tilt angle θc and the tilt angle θs were as indicated below in Table 1.

### [Examples 4 to 7 and Comparative example 4]

Tires of examples 4 to 7 and comparative example 4 were each obtained in the same manner as for example 1 except that the tilt angle θc and the tilt angle θs were as indicated below in Table 1.

### [Vertical stiffness]

A vertical stiffness constant of each tire was measured under the following conditions.
Used rim: MT6.0×17
Internal pressure: 200 kPa
Load: 1.4 kN
The vertical stiffness constant is indicated below in Tables 1 to 2 as an index with the vertical stiffness constant of the tire of comparative example 1 being 100. The greater the value of the index is, the greater the vertical stiffness constant is.

### [Ground-Contact area]

A ground-contact area was measured by using a ground-contact area measuring device, under the following measurement conditions.
Used rim: MT6. 0×17
Internal pressure: 200 kPa
Load: 1.4 kN
Camber angle: 40°
Slip angle: 0°
The ground-contact area is indicated below in Tables 1 to 2 as an index with the ground-contact area of the tire of comparative example 1 being 100. The greater the value of the index is, the greater the ground-contact area is.

### [Lateral force]

A lateral force was measured by using a flat belt type tire six-component force measuring device under the following measurement conditions.
Used rim: MT6.0×17
Internal pressure: 200 kPa
Load: 1.4 kN
Speed: 10 km/h
Camber angle: 40°
Slip angle: 0°
The lateral force is indicated below in Tables 1 to 2 as an index with the lateral force of the tire of comparative example 1 being 100. The greater the value of the index is, the higher the lateral force is.

**Table 1 Evaluation result**

| | Comp. Ex.1 | Comp. Ex.2 | Comp. Ex.3 | Ex.1 | Ex.2 | Ex.3 |
|---|---|---|---|---|---|---|
| Structure | - | CUT1 | CUT2 | FIG.2 | FIG. 5 | FIG.6 |
| The number of times of stacking | - | - | - | 1 | 2 | 1 |
| Angle θc [°] | - | - | - | 70 | 75 | 85 |
| Angle θs [°] | - | - | - | 70 | 75 | 75 |
| Vertical stiffness | 100 | 120 | 140 | 105 | 115 | 105 |
| Ground-contact area | 100 | 80 | 70 | 100 | 90 | 95 |
| Lateral force | 100 | 105 | 105 | 105 | 110 | 115 |

**Table 2 Evaluation result**

| | Comp. Ex.4 | Ex.4 | Ex.5 | Ex.6 | Ex.7 |
|---|---|---|---|---|---|
| Structure | FIG. 2 | FIG. 2 | FIG. 2 | FIG. 2 | FIG. 2 |
| The number of times of stacking | 1 | 1 | 1 | 1 | 1 |
| Angle θc [°] | 45 | 75 | 80 | 85 | 89 |
| Angle θs [°] | 45 | 75 | 80 | 85 | 89 |
| Vertical stiffness | 100 | 110 | 110 | 115 | 120 |
| Ground-contact area | 100 | 95 | 95 | 90 | 85 |
| Lateral force | 100 | 115 | 115 | 110 | 105 |

As indicated in Tables 1 to 2, evaluation is higher in the tires of examples than in the tires of comparative examples. The evaluation result clearly indicates that the present invention is superior.

The technique for the reinforcing layer described above is applicable also to various tires.

The foregoing description is in all aspects illustrative, and various modifications can be devised without departing from the essential features of the invention.

## Claims

1. A pneumatic tire comprising:
a tread;
a pair of beads;
a carcass;
a band; and
a reinforcing layer, wherein
each of the beads is disposed inward of the tread in a radial direction,
the carcass has a radial structure, and is extended on and between one of the beads and the other of the beads;
the band is disposed between the tread and the carcass in the radial direction, and the band includes a band cord that is helically wound;
the reinforcing layer is layered over the band from a radially outer side of the band, and the reinforcing layer is formed from a ribbon that is wound at least once in a circumferential direction, and the ribbon includes a reinforcing cord,
in the reinforcing layer, the reinforcing cord is extended alternately on and between one end portion of the band and the other end portion of the band, so as to extend in the circumferential direction,
a direction in which the reinforcing cord extends is tilted relative to the circumferential direction between one of ends of the band and the other of the ends of the band, and
an absolute value of an angle of the reinforcing cord relative to the circumferential direction is greater than or equal to 70°.

2. The pneumatic tire according to claim 1, wherein the absolute value of the angle of the reinforcing cord relative to the circumferential direction is not greater than 89°.

3. The pneumatic tire according to claim 1, wherein
the reinforcing layer includes a center portion and a pair of side portions, and each of the side portions is disposed outward of the center portion in an axial direction, and
a difference between an angle of the reinforcing cord relative to the circumferential direction in the center portion, and an angle of the reinforcing cord relative to the circumferential direction in each of the side portions is greater than or equal to 3° and not greater than 18°.

4. The pneumatic tire according to claim 2, wherein
the reinforcing layer includes a center portion and a pair of side portions, and each of the side portions is disposed outward of the center portion in an axial direction, and
a difference between an angle of the reinforcing cord relative to the circumferential direction in the center portion, and an angle of the reinforcing cord relative to the circumferential direction in each of the side portions is greater than or equal to 3° and not greater than 18°.

5. The pneumatic tire according to claim 1, wherein, in the reinforcing layer, the ribbon is wound twice in the circumferential direction.

6. The pneumatic tire according to claim 2, wherein, in the reinforcing layer, the ribbon is wound twice in the circumferential direction.

7. The pneumatic tire according to claim 3, wherein, in the reinforcing layer, the ribbon is wound twice in the circumferential direction.

8. The pneumatic tire according to claim 4, wherein, in the reinforcing layer, the ribbon is wound twice in the circumferential direction.
